(19) Europäisches Patentamt / European Patent Office / Office européen des brevets

(11) **EP 3 062 332 A1**

(12) **EUROPÄISCHE PATENTANMELDUNG**

(43) Veröffentlichungstag:
31.08.2016 Patentblatt 2016/35

(51) Int Cl.:
*H01J 49/06* (2006.01)   *H01J 49/14* (2006.01)

(21) Anmeldenummer: **15156526.4**

(22) Anmeldetag: **25.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Universität Innsbruck**
**6020 Innsbruck (AT)**

(72) Erfinder:
• **Breitenlechner, Martin**
**6020 Innsbruck (AT)**
• **Hansel, Armin**
**6020 Innsbruck (AT)**

(74) Vertreter: **Vossius & Partner**
**Patentanwälte Rechtsanwälte mbB**
**Siebertstrasse 3**
**81675 München (DE)**

(54) **Verfahren und Vorrichtung zur chemischen Ionisation eines Gasgemisches**

(57) Verfahren und Vorrichtung zur chemischen Ionisation von Analytgas-Teilchen in einem Trägergas durch Einbringen von Primärionen, dadurch gekennzeichnet, dass die Primär- und Produktionen mit einem rotierenden elektrischen Feld beschleunigt werden, welches rechtwinklig zu jener Richtung (5) steht, in der die Ionen zum Ausgang (3) des Reaktionsvolumens (1) transportiert werden. Dadurch kann beispielsweise unerwünschte Clusterbildung verringert werden, ohne die Transportgeschwindigkeit der Ionen durch die Reaktionskammer zu erhöhen, wodurch z.B. die Produktionenausbeute verbessert wird. Die erfindungsgemäße Vorrichtung erreicht dies durch N>3 Stabelektroden (6), an denen N Wechselspannungen $U_1(t),...,U_N(t)$ mit N unterschiedlichen, in einem Drehsinn aufsteigenden Phasenlagen $\varphi_1,...,\varphi_N$ anliegen.

$$U_i(t) = A_0 \cdot \sin(\omega\, t + \varphi_i)$$

$\varphi_1 = 0°$
$\varphi_2 = 90°$
$\varphi_3 = 180°$
$\varphi_4 = 270°$

**Fig. 1**

EP 3 062 332 A1

**Beschreibung**

Die vorliegende Erfindung betrifft ein Verfahren und eine Vorrichtung zur chemischen Ionisation [CI] eines Gasgemisches bzw. Probegases beispielsweise mittels Ionen-Atom-Reaktionen oder Ionen-Molekül-Reaktionen [IMR], insbesondere mittels Protonentausch-Reaktionen [PTR], wobei genanntes Gasgemisch aus zumindest einer Hauptkomponente bzw. einem Trägergas (z.B. $O_2$, $N_2$ oder einem Gemisch daraus, z.B. Luft) und einem oder mehreren Reaktantgasen bzw. Analyten (z.B. volatilen organischen Verbindungen [VOCs]) besteht, wobei genannter Ionisationsprozess dergestalt erfolgt, dass durch Reaktionen mit ins Gasgemisch zusätzlich eingebrachten Primärionen (z.B. $H_3O^+$, $NH_3^+$, $NO^+$, $O_2^+$, $NO_3^-$) aus nicht ionisierten Atomen oder Molekülen der Reaktantgase Produktionen entstehen. Die Reaktantgase liegen zumeist in sehr kleiner Konzentration vor, typisch im ppbv- bis pptv-Bereich (i.e. parts per billion/trillion by volume).

Die Erfindung betrifft ferner die Verwendung des erfindungsgemäßen Verfahrens und/oder der erfindungsgemäßen Vorrichtung in Verfahren und/oder Vorrichtungen zur Analyse der Eigenschaften eines Gasgemisches bzw. Probegases, insbesondere zur Analyse mittels CI-Massenspektrometern, insbesondere mittels IMR- und PTR-Massenspektrometern.

Bei Verfahren und Vorrichtungen zur (zumindest teilweisen) chemischen Ionisation eines Gasgemisches bzw. Probegases, welches aus einer Hauptkomponente bzw. einem Trägergas (z.B. $O_2$, $N_2$ oder einem Gemisch daraus, z.B. Luft) und einem oder mehreren (zumeist in sehr kleiner Konzentration vorhandenen) Reaktantgasen bzw. Analyten (z.B. volatilen organischen Verbindungen [VOCs] besteht, erfolgt die chemische Ionisation [CI] von Teilchen (i.e. Atomen oder Molekülen) der Reaktantgase dadurch, dass in das Probegas Primärionen eingebracht werden und durch Reaktionen zwischen den Primärionen und den Reaktantgas-Teilchen aus den zuvor neutralen Reaktantgas-Teilchen sogenannte Produktionen entstehen, wobei diese ionisierenden Reaktionen auch aus mehreren Reaktionsschritten bestehen können. Die Ionisation von Teilchen des Trägergases ist hierbei zumeist nicht beabsichtigt. Die Produktionen und die verbleibenden Primärionen werden nach dem Ionisationsprozess entweder sogleich einer ionenselektiven Analysator/Detektoreinheit (z.B. einem Massenspektrometer oder einem Ionen-Mobilitäts-Spektrometer) oder weiteren Verfahrensschritten zugeführt.

Eine spezielle Form (d.h. eine Untergruppe) von chemischen Ionisationsprozessen sind die sogenannten Protonentausch-Reaktionen [PTR]. Hierbei erfolgt die Ionisation eines Reaktantgas-Teilchens R durch Übertragung eines Protons $H^+$ eines Primärions $XH^+$, wodurch ein Produktion $RH^+$ gebildet wird und das Primärion $XH^+$ zu einem neutralen Molekül X wird:

$$R + XH^+ \rightarrow RH^+ + X$$

Es ist eine Vielzahl von chemischen Ionisationsprozessen bekannt, und dementsprechend gibt es auch eine Vielzahl von bekannten für die chemische Ionisation geeigneten Primärionen beider Polaritäten (z.B. $H_3O^+$, $NH_3^+$, $NO^+$, $O_2^+$, $NO_3^-$) sowie eine noch größere Anzahl von bekannten Atomen und Molekülen, die durch CI-Prozesse ionisierbar sind (z.B. sehr viele volatile organische Verbindungen [VOCs]).

Chemische Ionisationsprozesse sind in dem Sinne "schonend", als dass dabei weniger Energie auf das entstehende Produktion übertragen wird, als bei vielen anderen Ionisationsprozessen (z.B. Elektronenstoß-Ionisation). CI-Prozesse sind daher besonders vorteilhaft zur Ionisation von Molekülen, deren Produktionen leicht fragmentieren, d.h. deren Produktionen bereits bei niedrigen Anregungsenergien auseinanderbrechen. Deshalb sind CI-Prozesse besonders vorteilhaft für Anwendungen, bei denen das zu ionisierende Probegas Moleküle enthält, deren Produktionen leicht fragmentieren (z.B. VOCs), deren Fragmentierung aber unerwünscht ist.

Eine der wichtigsten Hauptanwendungen von Verfahren und Vorrichtungen zur chemischen Ionisation eines Probegases ist die CI-Massenspektrometrie, insbesondere die *analytische* CI-Massenspektrometrie, d.h. dass bei der Analyse des Probegases nicht nur die Massen bzw. der Typus der im Probegas enthaltenen Analytgas-Teilchen bestimmt werden sollen, sondern auch die Konzentrationen der Analytgas-Teilchen absolut oder relativ zueinander *quantitativ* gemessen werden sollen.

Die CI-Massenspektrometrie ist ein mittlerweile sehr hoch entwickeltes technisches Feld, weshalb sich hier der reichste Stand der Technik betreffend Verfahren und Vorrichtungen zur Ionisation eines Probegases mittels chemischer Ionisation [CI] findet. Selbstverständlich sind auch andere Anwendungen von CI-Prozessen bekannt und denkmöglich, z.B. die Ionen-Mobilitäts-Spektrometrie. Die Anwendung der vorliegenden Erfindung in solchen anderen Anwendungen ist von der Erfindung mit umfasst, auch wenn auf diese weiteren Anwendungen im Folgenden nicht näher eingegangen wird.

Die gängigsten Bauarten von CI-Massenspektrometern beinhalten folgende Vorrichtungen bzw. Baugruppen:

i. Eine Primärionenquelle, in welcher die Primärionen erzeugt und gegebenenfalls selektiert werden, sodass am Ausgang der Primärionenquelle nur Ionen des gewünschten Typs vorliegen.

ii. Eine sogenannte "Reaktionskammer", in welcher sich jener (im Folgenden "Reaktionsvolumen" oder "Reaktionsbereich" genannte) räumliche Bereich befindet, in welchem die Primärionen mit dem Probegas wechselwirken und somit die Produktionen erzeugt werden. In vielen Fällen ist diese Reaktionskammer so ausgebildet, dass die Primär- und Produktionen darin - zumeist mittels elektrischer Felder - auch transportiert und/oder geführt und/oder fokussiert werden.

iii. Ein Massenspektrometer, dem die in der Reaktionskammer erzeugten Produktionen und zumeist auch die verbleibenden Primärionen zugeführt werden, um ihre Massen und vorzugsweise auch ihre (relative) Konzentration zu bestimmen. Die heutzutage gängigsten Typen sind hier Quadrupol-Massenspektrometer [Quad-MS] und Time-of-Flight-Massenspektrometer [TOF-MS].

iv. Gegebenenfalls weitere separate Baugruppen zum Überführen der Ionen von einer Baugruppe in die nächste, z.B. zum Beschleunigen, Führen oder Fokussieren der Ionen, wie z.B. Beschleunigungsstrecken, Ionenführungen ("ion guides"), Ionenlinsen oder Ionentrichter ("ion funnels").

v. Weitere für den Betrieb nötige Komponenten und Baugruppen wie z.B. Ventile, Pumpen, Spannungsversorgungen, insbesondere z.B. für das Anlegen von Spannungen an Elektroden, etc.

Es gibt auch CI-Massenspektrometer, welche ohne separate Primärionenquelle (Baugruppe i.) auskommen, indem die Primärionen in der Reaktionskammer *in situ* erzeugt werden, z.B. mittels Penning-Ionisation oder mittels ionisierender Strahlung.

Die PTR-Massenspektrometrie und allgemein die CI-Massenspektrometrie sind beispielsweise in *Ref. /1/*, AT 001637 U1 (Lindinger & Hansel) und in den darin genannten Referenzen beschrieben. Weitere Beschreibungen der PTR-Massenspektrometrie finden sich u.a. in *Ref. /2/*, A. Hansel et al., International Journal of Mass Spectrometry and Ion Processes, 149/150 (1995) 609-619 und in *Ref. /3/*, A. Jordan et al., International Journal of Mass Spectrometry, Vol. 286 (2009) 32-38.

Die vorliegende Erfindung bezieht sich auf die Baugruppe ii) ("Reaktionskammer") bzw. auf die in dieser Reaktionskammer ablaufenden Verfahrensschritte. In der einschlägigen Patent- und Fachliteratur finden sich mehrere unterschiedliche Bezeichnungen für diese Reaktionskammer, wie z.B. "Reaktions- bzw. Ionisationsbereich", "Reaktions-bzw. Ionisationszelle", oder in jenen Fällen, in denen die Primär- und Produktionen durch elektrische Felder getrieben durch das Probegas driften, auch "Driftröhre bzw. -region bzw. -bereich".

Die einfachste Form einer CI-Reaktionskammer ist die sogenannte "selected ion flow tube" [SIFT], wie z.B. gezeigt in: *Ref. /4/*, N.G. Adams & D. Smith, International Journal of Mass Spectrometry and Ion Processes, Vol. 21 (1976), 349-359. Hier werden die Primär- und Produktionen allein durch den Probegasfluss zum Ausgang der Reaktionskammer transportiert. Nachteilig an dieser Ausführungsform ist zum einen, dass Ionen auf ihrem Weg In Richtung Ausgang der Reaktionskammer ungehindert zur Kammerwand hin diffundieren und dort verloren gehen. Ferner ist nachteilig, dass bei Vorhandensein von z.B. Wasserdampf im Probengas es zu Clusterbildungen der Primärionen mit Wassermolekülen kommt, und der CI-Prozess mit den geclusterten Primärionen zumeist nicht mehr wie gewünscht ablaufen kann: Beispielsweise wird der Analyt $C_6H_6$ (Benzen) vom Primärion $H_3O^+$ ionisiert, jedoch nicht vom Primärion-Cluster $H_3O^+ \cdot H_2O$.

Eine Lösung zur Verringerung solcher unerwünschter Clusterbildungen sind Reaktionskammern, die als sogenannte Driftföhren ausgebildet sind, wie z.B. in der oben zitierten *Ref. /2/*, A. Hansel et al. (1995) gezeigt. Hier weist die Reaktionskammer eine Mehrzahl von entlang einer Achse beabstandet angeordneten, koaxialen ringförmigen Elektroden auf. Diese ringförmigen Elektroden umgeben das Reaktionsvolumen der Reaktionskammer, innerhalb dessen die Primärionen mit dem Probegas reagieren und Produktionen erzeugt werden. An die Ringelektroden ist jeweils eine Gleichspannung angelegt, wobei zwischen benachbarten Ringelektroden jeweils eine Potentialdifferenz vorliegt, welche die Ionen axial in Richtung Ausgang der Reaktionskammer beschleunigt. Durch die randomisierenden Stöße der Ionen mit den neutralen Teilchen des Probegases stellt sich eine ionenspezifische mittlere Driftgeschwindigkeit und somit eine ionenspezifische mittlere Stoßenergie ein, deren Beträge vom Druck und der Zusammensetzung des Probegases und von der lokalen elektrischen Feldstärke abhängen. Durch die an die Ringelektroden angelegten Gleichspannungen kann somit den entstandenen Ionen-Clustern so viel mittlere kinetische Energie zugeführt werden, dass sie bei nachfolgenden Stößen mit neutralen Probegas-Teilchen, die vom elektrischen Feld nicht beschleunigt werden, mehrheitlich wieder zerfallen. Andererseits soll die mittlere Stoßenergie der Ionen in der Reaktionskammer aber so gering sein, dass die ebenfalls unerwünschte Fragmentierung von Produktionen möglichst vermieden wird.

Besonders nachteilig an solchen Driftröhren, bei denen von Ringelektroden erzeugte statische elektrische Felder (DC-Felder) die Ionen in axialer Richtung zum Ausgang der Reaktionskammer treiben, ist, dass die zur Vermeidung der Clusterbildung nötige Beschleunigung der Ionen in axialer Richtung die Verweildauer der Ionen in der Reaktionskammer und damit die für den Ionisationsprozess zur Verfügung stehende Reaktionszeit verkürzt, was die Produktionenausbeute verringert. Unter "Produktionenausbeute" ist hier und im Folgenden zu verstehen: Das Verhältnis der pro Zeiteinheit aus der Reaktionskammer austretenden Produktionen zur Anzahl der pro Zeiteinheit eingebrachten Primärionen. Die Produktionenausbeute ist somit ein Maß für die Ionisations-Effizienz der CI-Reaktionskammer und beeinflusst maßgeblich die Empfindlichkeit bzw. Sensitivität des CI-Massenspektrometers.

Ein weiterer Nachteil solcher mit axialen DC-Feldern betriebenen Driftröhren ist, dass die Ionen quer zur Achse nicht geführt bzw. nicht zur Achse hin fokussiert werden, deshalb ungehindert von der Achse weg diffundieren und daher nur ein Bruchteil der Ionen durch die Ausgangsblende der Reaktionskammer gelangt, was wiederum die Produktionenausbeute verringert.

Eine Möglichkeit, in dieser ringförmigen Elektrodentopologie die Ionen auch quer zur Achse zu führen bzw. auf die Achse hin zu fokussieren besteht darin, auf die Ringelektroden zusätzlich zur Gleichspannung auch Wechselspannungen anzulegen, wie z.B. in *Ref. /5/*, S. Barber et al., Analytical Chemistry, 2012, Vol. 84, 5387-5391 oder in *Ref. /6/*, US 6,107,628 (Smith & Shaffer,) beschrieben. An die Ringelektroden werden RF-Wechselspannungen (d.h. Wechselspannungen im Radiofrequenzbereich von ca. 100kHz bis ca. 100MHz) angelegt, welche zwischen zwei benachbarten Elektroden jeweils um 180° phasenverschoben sind. Diese RF-Wechselspannungen erzeugen ein effektives Potential, das die Ionen zur Achse hin fokussiert und somit verhindert, dass Ionen zur Kammerwand oder zu den Elektroden hin diffundieren und dort verloren gehen bzw. wieder neutralisiert werden. Gleichspannungen können zusätzlich überlagert werden, um die Ionen in Richtung Ausgang der Reaktionskammer zu transportieren.

Ein Nachteil von solchen aus ringförmigen Elektroden bestehenden und mit RF-Wechselspannungen betriebenen sogenannten Ionenlinsen und Ionentrichtern besteht insbesondere darin, dass sich die Stoßenergien der Ionen zeitlich und lokal stark ändern, da einerseits das RF-Feld an jeder Stelle um den Wert Null oszilliert und andererseits die Amplitude dieser Oszillation längs der Achse stark variiert. Das Einstellen einer hinsichtlich des Vermeidens von Clusterbildung und Fragmentierung optimalen mittleren Stoßenergie - die idealerweise im gesamten Reaktionsvolumen zeitlich und örtlich möglichst konstant sein soll - wird dadurch verunmöglicht.

Eine weitere bekannte Möglichkeit, die Ionen in der Reaktionskammer quer zu ihrer Transportrichtung zu führen bzw. auf die Achse hin zu fokussieren besteht darin, Quadrupole, Hexapole, Oktopole usw. zur Ionenführung einzusetzen. Hierbei wird an eine geradzahlige Anzahl von parallel zur Achse symmetrisch um den Reaktionsraum angeordneten Stabelektroden eine RF-Wechselspannung angelegt, welche zwischen zwei benachbarten Stabelektroden jeweils um 180° phasenverschoben ist und zwischen zwei gegenüberliebenden Stabelektroden um 0° phasenverschoben ist. Solche - im Folgenden als *"2-Phasen-Multipole"* bezeichnete - Anordnungen erzeugen ein effektives Potenzial, das die Ionen zur Achse hin fokussiert. Dieses effektive Potenzial entsteht aus dem Wechselspiel des oszillierenden RF-Feldes mit den randomisierenden Stößen der Ionen mit dem wie ein Puffergas wirkenden neutralen Teilchen des Trägergases.

Nachteilig an solchen 2-Phasen-Multipolen ist der Umstand, dass auf der Achse das elektrische Feld stets Null Volt pro Zentimeter [V/cm] ist, da sich hier die Felder der jeweils gegenüberliegenden Stabelektroden gegenseitig aufheben. Dies bedeutet, dass mit den von solchen 2-Phasen-Multipolen generierten Feldern die mittlere Stoßenergie der Ionen in der Nähe der Achse, also an jenem Ort, wo sich wegen der Fokussierung die meisten Ionen aufhalten, nicht erhöht wird, womit also unerwünschte Clusterbildung nicht verringert werden kann. Abseits der Symmetrieachse solcher 2-Phasen-Multipole oszilliert der Betrag des elektrischen Feldvektors zwischen Null V/cm und einem Maximalwert $E_{max}(r)$, der vom radialen Abstand $r$ zur Achse abhängt. Dies führt zur selben Problematik wie oben schon beschrieben: Das Einstellen einer hinsichtlich des Vermeidens von Clusterbildung und Fragmentierung optimalen mittleren Stoßenergie wird dadurch verunmöglicht.

Aufgabe der Erfindung ist es, ein Verfahren und eine Vorrichtung der eingangs genannten Art bereitzustellen, welche die oben beschriebenen Nachteile des Standes der Technik verbessern, insbesondere indem die Produktionenausbeute durch eine bessere Verminderung von unerwünschter Clusterbildung einerseits und unerwünschter Fragmentierung andererseits verbessert wird. Diese Aufgabe wird mit den Merkmalen der Patentansprüche gelöst.

Die vorliegende Erfindung befasst sich mit der Verbesserung von Verfahren und Vorrichtungen zur chemischen Ionisation [CI] eines Gasgemisches bzw. Probegases, wobei genanntes Gasgemisch aus zumindest einer Hauptkomponente bzw. einem Trägergas und einem oder mehreren zumeist in sehr kleiner Konzentration vorhandenen Reaktantgasen bzw. Analyten besteht. Der genannte Ionisationsprozess erfolgt dergestalt, dass durch Reaktionen mit ins Gasgemisch zusätzlich eingebrachten Primärionen aus nicht ionisierten Atomen oder Molekülen der Reaktantgase Produktionen entstehen.

Wie bei den meisten Verfahren und Vorrichtungen zur chemischen Ionisation werden auch bei der vorliegenden Erfindung das Probegas und die Primärionen in ein Reaktionsvolumen (1) eingebracht, in dem die CI-Prozesse stattfinden und das folgende Topologie aufweist:

Die Oberfläche dieses Reaktionsvolumens (1) besteht aus einer ersten Deckfläche (2), einer zweiten Deckfläche (3) und einer sich zwischen diesen beiden Deckflächen erstreckenden Mantelfläche (4).

Das Reaktionsvolumen ist von einer - im Folgenden als Zentrallinie (5) bezeichneten - Achse durchdrungen welche sich von der ersten Deckfläche (2) zur zweiten Deckfläche (3) erstreckt und zur Gänze innerhalb des Reaktionsvolumens (1) verläuft, sodass an jedem Ort im Reaktionsvolumen (1) eine axiale Richtung definierbar ist, die parallel zur Zentrallinie (5) verläuft und eine radiale Richtung und eine Radialebene definierbar sind, die rechtwinklig auf die Zentrallinie (5) stehen.

Klärend ist hier festzuhalten, dass mit den Begriffen Reaktionsvolumen (1), erste Deckfläche (2), zweite Deckfläche (3), Mantelfläche (4) und Zentrallinie (5) nicht real existierende Bauteile einer Vorrichtung gemeint sind, sondern (abstrakte) geometrische Objekte zur Beschreibung von topologischen Eigenschaften des Standes der Technik und der vorliegenden Erfindung.

In den meisten Reaktionskammern am Stand der Technik ist das Reaktionsvolumen (1) im Wesentlichen rotationssymmetrisch, also z.B. zylinder- oder kegelförmig. Die Zentrallinie (5) liegt hier auf der geraden Rotationssymmetrieachse des Zylinders. Aber auch andere, von der rotationssymmetrischen Form abweichende Ausprägungen des Reaktionsvolumens sind möglich, mitunter vorteilhaft und erfindungsgemäß vorgesehen, wie z.B. solche mit bogen- oder S-förmiger Zentrallinie, beispielsweise um aus der Primärionenquelle austretende unerwünschte Strahlung auf ihrem Weg durch den Reaktionsraum auszublenden und am Eintritt in die auf die Reaktionskammer folgenden Baugruppen (z.B. Massenspektrometer) zu hindern.

Diese im Stand der Technik gelegene Topologie des Reaktionsvolumens (1), in der eine axiale und eine radiale Richtung definiert ist, ergibt sich daraus, dass die Primärionen zumeist durch die erste Deckfläche (2) ins Reaktionsvolumen (1) eingebracht werden und die Produktionen (und auch die restlichen Primärionen) mittels eines Gasflusses und/oder mittels statischer elektrischer Felder in axialer Richtung durch das Reaktionsvolumen transportiert werden bis sie das Reaktionsvolumen durch die zweite Deckfläche (3) in Richtung Ausgang der Reaktionskammer verlassen. Wie oben bereits ausgeführt ist dabei ein Fokussieren der Ionen auf die Zentrallinie (5) hin, d.h. ein radiales Führen, vorteilhaft und wünschenswert, aber nicht zwingend erforderlich.

In Reaktionsvolumina der hier beschriebenen Topologie ist somit die axiale Richtung die Transport- bzw. Driftrichtung der Ionen, und die darauf rechtwinklige radiale Richtung ist jene, in der die Ionen gegebenenfalls mittels von RF-Feldern erzeugten effektiven Potenzialen geführt bzw. zur Zentrallinie (5) hin fokussiert werden.

Aus der obigen detaillierten Diskussion der Vor- und Nachteile des Standes der Technik ergeben sich folgende (konkurrierende) Kriterien betreffend die erfindungsgemäße Optimierung von Verfahren und Vorrichtungen zur chemischen Ionisation, welche Reaktionsvolumina der hier beschriebenen Topologie verwenden:

A) Zur Verringerung unerwünschter Clusterbildung sollen entstandene Ionen-Cluster mit einem elektrischen Feld so stark beschleunigt werden, dass sie bei nachfolgenden Stößen mit neutralen und daher vom elektrischen Feld nicht beschleunigten Probegasteilchen wieder zerfallen.

B) Andererseits darf dem Produktionen-Ensemble vom elektrischen Feld aber nicht so viel kinetische Energie (i.e. mittlere Stoßenergie) zugeführt werden, dass es bei Stößen mit neutralen Probegasteilchen zu Fragmentierungen kommt.

C) Aus A) und B) ergibt sich ein "optimales Fenster" für die elektrische Feldstärke bzw. sogar eine optimale Feldstärke größer als Null, die zeitlich und örtlich möglichst konstant sein soll, zumindest in jenem Bereich des Reaktionsvolumens, in dem die Ionendichte am höchsten ist. Dies legt gemäß dem Stand der Technik die Verwendung von statischen Feldern (DC-Feldern) nahe, die jedoch in puncto Produktionenausbeute nachteilig sind, wie sich aus der folgenden Erklärung zu Kriterium D) ergibt:

D) Zur Erreichung einer hohen Produktionenausbeute soll die zur Verfügung stehende Reaktionszeit, d.h. die Aufenthaltsdauer der Primärionen im Reaktionsvolumen, lang sein. Starke DC-Felder zum Erfüllen von Kriterium C) sind daher in puncto Produktionenausbeute nachteilig, weil sie die Primärionen rasch aus dem Reaktionsvolumen abtransportieren und damit die zur Verfügung stehende Reaktionszeit verkürzen.

E) Ein Führen bzw. Fokussieren der Ionen entlang der Zentrallinie mittels von RF-Wechselfeldern erzeugten effektiven Potenzialen ist vorteilhaft und wünschenswert, läuft aber bei allen Lösungen am Stand der Technik dem Kriterium C) zuwider, das eine Feldstärke fordert, die zeitlich (und idealerweise auch örtlich) konstant ist.

Die Erfindung stellt ein Verfahren der eingangs genannten Art bereit, welches die Nachteile des Standes der Technik verbessert, insbesondere indem es die obigen Optimierungskriterien besser erfüllt, als der Stand der Technik. Erfindungsgemäß erreicht wird dies durch die kennzeichnenden Merkmale der Patentansprüche 1 bis 5.

Das Prinzip und die Vorteile des erfindungsgemäßen Verfahrens sind wesentlich leichter und klarer verständlich zu machen und darzulegen, indem sie zunächst anhand der Merkmale des Patentanspruchs 1 und dann durch die Merkmale des abhängigen Anspruchs 5 weiter erläutert werden, anstatt anhand der Merkmale des Anspruchs 1 alleine. Die erfinderischen Überlegungen und Vorteile, die den Ansprüchen 1 bis 4 alleine zugrunde liegen, werden dann im weiteren Verlauf der Erfindungsbeschreibung ergänzend dargelegt und verständlich gemacht. Aus diesen weiteren Erklärungen wird auch klar ersichtlich, dass auch Ausführungen gemäß den Ansprüchen 1 bis 4 demselben erfinderischen Prinzip unterliegen und somit von der Erfindung mit umfasst sind.

Das erfindungsgemäße Verfahren kann ferner folgende Verfahrensschritte aufweisen:

Schritt A): Beschleunigen der im Reaktionsvolumen (1) befindlichen Ionen (Primärionen, entstandene Produktionen und allenfalls entstandene Ionen-Cluster) mittels eines zeitlich periodischen elektrischen Feldes $E(x,t)$,

wobei $E(x,t)$ an allen auf der Zentrallinie (5) gelegenen Punkten {Z} eine bezogen auf diese Zentrallinie (5) rechtwinklige (i.e. radiale) Feldvektor-Komponente $E_r(Z,t)$ hat, die periodisch rotiert, d.h. während der Periodendauer T genau eine 360°-Drehung in der Radialebene vollführt und deren Betrag $|E_r(Z,t)|$ vorzugsweise zu mehr als 80% der innerhalb einer Periodendauer T liegenden Zeiten ungleich Null ist, insbesondere bevorzugt zu allen Zeiten ungleich Null, insbesondere bevorzugt konstant oder nahezu konstant ist,

wobei E(x,t) an allen auf der Zentrallinie (5) gelegenen Punkten {Z} gelegenen Punkten eine zur Zentrallinie (5) parallele (i.e. axiale) Feldvektor-Komponente $E_{axi}(Z,t)$ hat, deren Betrag $|E_{axi}(Z,t)|$ vorzugsweise kleiner ist, als der Betrag der rotierenden radialen Komponente $|E_r(Z,t)|$, vorzugsweise deutlich kleiner oder Null ist,

wobei $t$ die Zeit ist, x ein Ortsvektor ist, beispielsweise mit den kartesischen Koordinaten (x,y,z), Z der Ortsvektor eines auf der Zentrallinie (5) gelegenen Punktes ist, {Z} die Menge aller zur Zentrallinie (5) gehörigen Ortsvektoren Z ist und T die Periodendauer einer 360°-Drehung von $E_r(Z,t)$ ist, und gegebenenfalls

wobei der Betrag $|E_r(Z,t)|$ des rotierenden Feldvektors $E_r(Z,t)$ zu allen Zeiten $t$ und an allen auf der Zentrallinie gelegenen Punkten {Z} ungleich Null und nahezu konstant, d.h. um maximal ±10% von seinem zeitlich und örtlich gemittelten Mittelwert $E_0$ abweicht, vorzugsweise konstant ist, und

wobei der Betrag der axiale Feldkomponente $|E_{axi}(Z,t)|$ zu allen Zeiten gegenüber der radialen Komponente vernachlässigbar klein ist, vorzugsweise gleich Null ist,

$$\text{d.h. } |E_{axi}(Z,t)| \approx 0 \text{ und somit } E(Z,t) \approx E_r(Z,t), \text{ und } |E(Z,t)| \approx |E_r(Z,t)| = E_0 \pm 10\%.$$

Mit anderen Worten ausgedrückt wird beim Verfahren nach Anspruch 5 rückbezogen auf Anspruch 1 ein zeitlich periodisches elektrisches Feld E(x,t) angelegt, das an allen Punkten {Z} der Zentrallinie folgende Eigenschaft aufweist: Der Feldvektor $E(Z,t)$ hat *keine* maßgebliche axiale Komponente, steht daher *rechtwinklig auf die Zentrallinie, rotiert periodisch* und hat einen *nahezu konstanten bzw. vorzugsweise konstanten Betrag* $E_0$. Die "Lockerung", dass der Betrag $E_0 \pm 10\%$ nicht zwangsläufig *strikt* konstant ist, ergibt sich aus den technischen Machbarkeitsgrenzen beim Erzeugen solcher E-Felder: Die bevorzugten Frequenzen liegen im MHz-Bereich, und die bevorzugten Amplituden der Wechselspannungen liegen im Kilovolt-Bereich. Mit diesen Vorgaben ist es mitunter sehr aufwändig bzw. kaum machbar, ganz "saubere", d.h. verzerrungsfreie Sinus-Spannungen zu erzeugen. Detailliertere Ausführungen hierzu finden sich unten bei der Beschreibung der erfindungsgemäßen Vorrichtung.

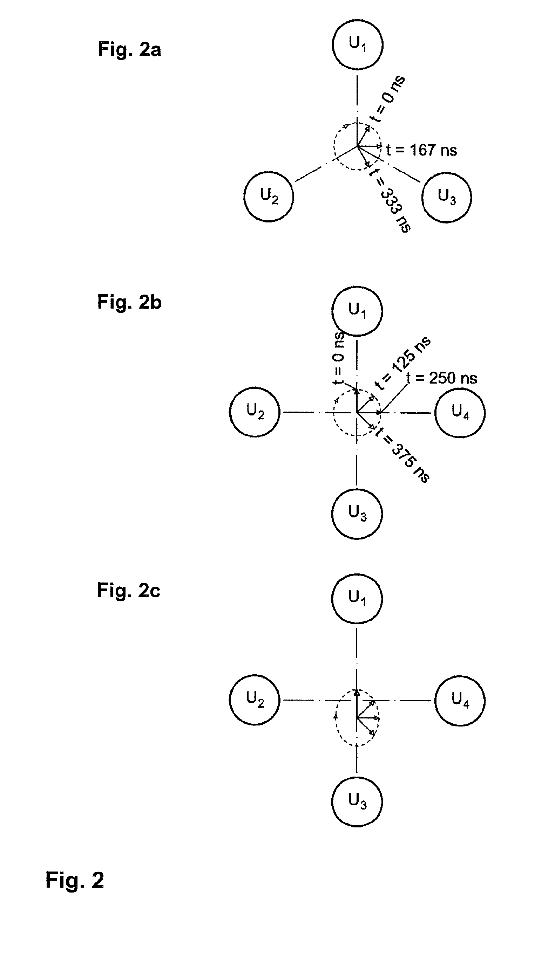

Aus den bekannten Eigenschaften elektrischer Felder und aus grundsätzlichen Stetigkeits- und Symmetrie-Überlegungen folgt, dass dieses rotierende E-Feld auch in einer Umgebung der Zentrallinie, d.h. in einem die Zentrallinie (eng) umgebenden Zentralvolumen, dieselben Eigenschaften haben muss: Der Feldvektor rotiert mit derselben Periodendauer bzw. Frequenz rechtwinklig zur Zentrallinie (d.h. in der Radialebene) und sein Betrag $E_0$ ist *zumindest nahezu* konstant. (Weitere Details hierzu siehe unten, in den Erklärungen zu Fig. 2.)

Das erfindungsgemäße Beschleunigen der Ionen mittels eines E-Feldes mit diesen Eigenschaften hat folgende Wirkungen und Vorteile:

I. Die Ionen werden mit einer *nahezu konstanten* Feldstärke stets in radialer Richtung beschleunigt, womit es möglich ist, das aus den Optimierungskriterien **A)** und **B)** folgende Optimierungskriterium **C)** [Clusterbildung versus Fragmentierung] zu erfüllen, ohne das Optimierungskriterium **D)** [Aufenthaltsdauer bzw. Reaktionszeit] zu verletzen, da die Primärionen vom angelegten Feld *nicht* rasch axial in Richtung Ausgang der Reaktionskammer transportiert werden. Mit anderen Worten ist es so möglich, die Ionen gemäß Kriterium **C)** "optimal" zu beschleunigen, ohne die Reaktionszeit der Primärionen zu verkürzen, weil die radiale Beschleunigungsrichtung der Ionen vom längs der Zentrallinie gerichteten Transport in Richtung Ausgang der Reaktionskammer entkoppelt ist. Dies stellt das zentrale Prinzip der Erfindung dar.

II. Bei geeigneter Wahl der Rotationsfrequenz des Feldvektors werden die Ionen auch nicht radial in Richtung Mantelfläche aus dem Reaktionsvolumen getrieben, was Kriterium **D)** [Aufenthaltsdauer bzw. Reaktionszeit] verletzen würde, sondern ganz im Gegenteil: Im Zusammenspiel mit randomisierenden Stößen der Ionen mit dem wie ein Puffergas wirkenden neutralen Trägergas erzeugt das rasch rotierende, räumlich inhomogene E-Feld ein effektives Potenzial, das die Ionen zur Zentrallinie hin fokussiert, womit auch das Optimierungskriterium **E)** [Fokussierung] erfüllt ist.

III. Der vorgenannte Punkt III. (Fokussierung auf die Zentrallinie) wirkt sich zusätzlich positiv auf die Erfüllung von Kriterium **C)** [Clusterbildung versus Fragmentierung] aus, das die Beschleunigung der Ionen mit einer konstanten, "optimalen" Feldstärke fordert, da sich wegen dieser Fokussierung die Ionen mehrheitlich im die Zentralachse (eng) umschließenden Zentralvolumen aufhalten, und eine räumliche Inhomogenität der Feldstärke daher keine große Rolle spielt.

IV. Wenn sich - wie es in manchen Ausführungsbeispielen der Erfindung der Fall sein mag - kein oder nur ein schwaches effektives Potential ausbildet, das die Ionen zur Zentrallinie hin fokussiert, so werden die Ionen vom rotierenden Feldvektor auch dann nicht rasch radial aus dem Reaktionsvolumen getrieben: Bei hinreichend hoher Rotationsfrequenz (z.B. im MHz-Bereich) vermag das **E**-Feld die Ionen, die durch die vielen randomisierenden Stöße mit dem wie ein Puffergas wirkenden Trägergas gebremst werden bzw. dadurch eine stark herabgesetzte Mobilität haben, nicht bis zur Wand der Reaktionskammerwand zu treiben, bevor es (eine halbe Periodendauer später) schon wieder in die Gegenrichtung zeigt, also von der Kammerwand weg. Mit anderen Worten vereinfacht ausgedrückt werden die Ionen nicht radial aus dem Reaktionsvolumen getrieben, weil die Richtung der Beschleunigung durch das **E**-Feld stets rasch rotiert und daher keine Richtung bevorzugt ist, in welche die vom Trägergas gebremsten und daher weniger mobilen Ionen getrieben werden.

Aus diesen Erläuterungen ist nun klar, dass auch dann bereits Vorteile erzielt werden, wenn an das periodisch rotierende **E**-Feld nicht so strikte Forderungen gestellt werden wie gemäß Anspruch 5 (Betrags-Konstanz und Wegfall einer axialen Feldkomponente). Eine periodisch rotierende radiale Komponente $E_r(Z,t)$ führt dem Ionen-Ensemble in jedem Fall kinetische Energie zu, die der Vermeidung von Clusterbildungen dienlich ist, ohne dadurch den Transport der Ionen durch das Reaktionsvolumen zu beschleunigen und damit die Reaktionszeit unvorteilhaft zu verkürzen.

Weiter unten wird gezeigt, dass erfindungsgemäße **E**-Felder auch mit phasenverschobenen Rechteck-Spannungen erzeugt werden können. Die bevorzugten Frequenzen liegen im MHz-Bereich, und die nötigen elektrischen Spannungen reichen bis in den kV-Bereich. Bei diesen Frequenzen und Spannungen ist ein ideales Rechtecksignal nicht machbar, und es mag daher bei der Erzeugung des erfindungsgemäßen E-Feldes dazu kommen, dass der rotierende Feldvektor $E_r(Z,t)$ zu manchen Zeiten während eines Umlaufes auch Null wird, wegen einer vom perfekten Rechteck abweichenden Signalform. In jenen (mehrheitlichen) Zeiten, in denen $E_r(Z,t)$ nicht Null ist, entfaltet er die oben beschriebene erfindungsgemäße und vorteilhafte Wirkung.

Es ist in vielen Fällen von Vorteil, wenn das angelegte **E**-Feld auch eine axiale Komponente $E_{axi}(Z,t)$ aufweist, bevorzugt mit moderatem, aber konstantem Betrag. Diese Axiale Komponente kann dem Transport der Ionen zum Ausgang des Reaktionsvolumens, wenn kein dementsprechender Gasfluss erfolgt. Umgekehrt kann bei starkem Gasfluss diese axiale Komponente dazu dienen, die Verweildauer der Ionen im Reaktionsvolumen vorteilhaft zu verlängern, indem diese axiale Komponente gegen den Gasfluss gerichtet wird.

Im Stand der Technik ist kein Verfahren bekannt, das die hier vorgeschlagene, in mehrfacher Hinsicht vorteilhafte **E**-Feld-Topologie mit periodisch rotierendem Feldvektor zur Optimierung der chemischen Ionisation eines Probegases vorschlägt.

Bevorzugt und vorteilhaft sind **E**-Felder, deren rotierende radiale Komponente $E_r(Z,t)$ einen Betrag $|E_r(Z,t)|$ aufweist, der an allen auf der Zentrallinie (5) gelegenen Punkten {Z} zu mehr als 80% der innerhalb einer Periodendauer T liegenden Zeiten höchstens um 50% seines Maximalwertes $E_{max}(Z)$ variiert, d.h. im Intervall $[0,5*E_{max}(Z),E_{max}(Z)]$ liegt (z.B. Anspruch 2). Dies verbessert das Erfüllen der oben erläuterten Optimierungskriterien.

Bevorzugt und vorteilhaft sind weitere E-Felder, bei denen der Betrag $|E_r(Z,t)|$ über zumindest 80% der Länge der Zentrallinie (5) um maximal 50% seines Maximalwertes variiert (z.B. Anspruch 3). Dies verbessert weiter das Erfüllen der oben erläuterten Optimierungskriterien.

Besonders bevorzugt und vorteilhaft sind weitere **E**-Felder, die dadurch gekennzeichnet sind, dass die Rotation der radialen Feldvektorkomponente $E_r(Z,t)$ im Wesentlichen einer harmonischen Kreisbewegung entspricht, d.h. dass $E_r(Z,t)$ in kartesischen Koordinaten (X,Y) dargestellt, die im jeweiligen Punkt **Z** rechtwinklig auf die Zentrallinie (5) stehen, folgender Gleichung genügt:

$$E_r(Z,t) = u_x \cdot [A_x(Z,t) \cdot \sin(\omega t + \Phi_0)] + u_y \cdot [A_x(Z,t) \cdot \cos(\omega t + \Phi_0)],$$

wobei $u_x$ der Einheitsvektor der X-Koordinate und $u_y$ der Einheitsvektor der Y-Koordinate ist, $\omega$ die Kreisfrequenz der Rotation ist, $\Phi_0$ ein globaler Phasen-Offset ist, und

wobei der Betrag $|Er(Z,t)|$ um maximal $\pm10\%$ variiert, vorzugsweise zu allen Zeiten konstant ist, d.h. $|E_r(Z,t)|$ = $E_0$ $\pm10\%$., wobei $E_0$ eine Konstante ist (Anspruch 4). Dies verbessert weiter das Erfüllen der oben erläuterten Optimierungskriterien.

Wie oben bereits ausführlich erläutert sind insbesondere E-Felder besonders bevorzugt und vorteilhaft, die dadurch gekennzeichnet sind, dass der Betrag $|E_r(Z,t)|$ des rotierenden Feldvektors $E_r(Z,t)$ zu allen Zeiten $t$ und an allen auf der Zentrallinie gelegenen Punkten {Z} ungleich Null und nahezu konstant ist, d.h. um maximal $\pm10\%$ von seinem zeitlich und örtlich gemittelten Mittelwert $E_0$ abweicht, und wobei die axiale Feldkomponente $E_{axi}(Z,t)$ zu allen Zeiten gleich Null ist,

$$\text{d.h. } \mathbf{E(Z,t)} = \mathbf{E_r(Z,t)} \text{ und } |\mathbf{E_r(Z,}t)| = E_0 \pm 10\% \text{ (Anspruch 5).}$$

An dieser Stelle wird auch klar, warum es für die Klarheit der Offenbarung der Erfindung *nicht* notwendig ist, in den Patentansprüchen klarzulegen wo *genau* die Zentrallinie bezogen auf die Deck- und Mantelflächen räumlich verläuft (z.B. durch eine Festlegung wie "Zentrallinie erstreckt sich *vom Zentrum* der ersten Deckfläche *zum Zentrum* der zweiten Deckfläche"). Die Deck- und Mantelflächen und die Zentrallinie sind keine real existierenden Bauteile einer Vorrichtung, sondern abstrakte geometrische Objekte zur Beschreibung der Topologie der Reaktionskammer und des die Erfindung kennzeichnenden **E**-Feldes. Die Zentrallinie verläuft also implizit dort, wo das erfindungsgemäße **E**-Feld angelegt wird bzw. dort, wo es die zur Zentrallinie gehörigen Eigenschaften hat, bzw. bildet sich "automatisch" virtuell dort aus, wo man das Feld mit den erfindungsgemäß definierten Eigenschaften anlegt. Dieselbe Argumentation gilt analog auch für die im Folgenden geoffenbarte erfindungsgemäße Vorrichtung.

Die Erfindung stellt eine Vorrichtung der eingangs genannten Art bereit, welche die Nachteile des Standes der Technik verbessert, insbesondere indem sie eine Vorrichtung bereitstellt, welche beispielsweise auch die Durchführung des erfindungsgemäßen vorteilhaften Verfahrens ermöglicht. Im Speziellen ermöglicht die Erfindung die Erzeugung von elektrischen Feldern $\mathbf{E(x,}t)$ mit den kennzeichnenden Merkmalen der Verfahrens-Ansprüche 1 bis 5 im Reaktionsvolumen. Erfindungsgemäß erreicht wird dies insbesondere durch die kennzeichnenden Merkmale der Patentansprüche 6 bis 14.

Die genannte Vorrichtung beinhaltet - wie die meisten Reaktionskammern zur chemischen Ionisation am Stand der Technik - einen Reaktionsbereich bzw. ein Reaktionsvolumen (1), wobei die Oberfläche dieses Reaktionsvolumens aus einer ersten Deckfläche (2), einer zweiten Deckfläche (3) und einer sich zwischen den beiden Deckflächen (2, 3) erstreckenden Mantelfläche (4) besteht und das Reaktionsvolumen (1) von einer Zentrallinie (5) durchdrungen ist, welche sich von der ersten Deckfläche (2) zur zweiten Deckfläche (3) erstreckt und zur Gänze innerhalb des Reaktionsvolumens (1) verläuft, sodass im Reaktionsvolumen (1) eine axiale Richtung definierbar ist, die parallel zur Zentrallinie (5) verläuft und eine radiale Richtung und eine Radialebene definierbar sind, die rechtwinklig auf die Zentrallinie (5) stehen.

Klärend ist hier nochmals festzuhalten, dass mit den Begriffen Reaktionsvolumen (1), erste Deckfläche (2), zweite Deckfläche (3), Mantelfläche (4) und Zentrallinie (5) nicht real existierende Bauteile einer Vorrichtung gemeint sind, sondern (abstrakte) geometrische Objekte zur Beschreibung von topologischen Eigenschaften des Standes der Technik und der vorliegenden Erfindung.

Die genannte Vorrichtung umfasst ferner zumindest drei oder mehr vorzugsweise stabförmig ausgebildeten Elektroden (6), d.h. N Elektroden (6), wobei N eine ganze Zahl größer oder gleich Drei ist, wobei jede dieser $N\geq3$ Elektroden (6) so ausgebildet und angeordnet ist, dass sie sich vom Rand der ersten Deckfläche (2) bis zum Rand der zweiten Deckfläche (3) erstreckt und sich von außen an das Reaktionsvolumen (1) schmiegt, d.h., dass sie in ihrem gesamten Erstreckungsverlauf die Mantelfläche (4) von außen tangierend berührt.

Die genannte Vorrichtung umfasst ferner eine Wechselspannungsquelle, die mit jeder der $N\geq3$ Elektroden (6) elektrisch verbindbar ist,

Die genannte Vorrichtung ist dadurch gekennzeichnet, dass die Wechselspannungsquelle so ausgebildet ist, dass an jede der $N\geq3$ Elektroden (6) jeweils eine periodische Wechselspannung (i.e. eine zeitlich periodische Spannung) $U_i(t)$ anlegbar ist, wobei $U_i(t)$ die Wechselspannung an der i-ten Elektrode ist,
wobei die Wechselspannungen $U_1(t)$ bis $U_N(t)$ jeweils dieselbe Periodendauer T bzw. dieselbe Frequenz $f = 1/T$ haben, wobei aber alle Wechselspannungen $U_i(t)$ eine unterschiedliche Phasenlage $\varphi_i$ zwischen 0° und 360° haben, d.h. jede Spannung $U_{i>1}(t)$ gegenüber der ersten Spannung $U_1(t)$ um den Bruchteil $\Delta t_i = (\varphi_i/360°)\cdot T$ der Periodendauer $T$ zeitlich verschoben ist,
wobei, wenn man die Elektroden (6) entlang des Randes einer Deckfläche (2,3) in einer Richtung (d.h. in einem Drehsinn) durchnummeriert, die Phasenlagen $\varphi_i$ bzw. $\Delta t_i$ aufsteigend geordnet sind, d.h.

$$\varphi_1 = 0° < \varphi_2 < \ldots < \varphi_i < \ldots < \varphi_N < 360° \text{ , bzw.}$$

$$\Delta t_1 = 0 < \Delta t_2 < \ldots < \Delta t_i < \ldots < \Delta t_N < T \, .$$

Mit anderen Worten zusammengefasst erstrecken sich zumindest drei Elektroden vom Rand der ersten Deckfläche (2) entlang der Mantelfläche (4) bis zum Rand der zweiten Deckfläche (3) und werden mit Wechselspannungen beaufschlagt, die in einem Drehsinn aufsteigende Phasenlagen haben. Dies ermöglicht es, im Reaktionsvolumen ein periodisch rotierendes elektrisches Feld zu erzeugen, das die kennzeichnenden Merkmale des elektrischen Feldes des erfindungsgemäßen Verfahrens hat und bewirkt in der Folge die oben detailliert beschriebenen Vorteile.

Besonders bevorzugt sind hierbei Elektrodenanordnungen, die an jedem Punkt der Zentrallinie (5) rotationsinvariant bei einer Drehung um 360°/N sind, wobei N die Anzahl der Elektroden ist, und Wechselspannungen deren Phasenlagen $\varphi_i$ = [(i-1)/N]·360° sind, wobei i die i-te Elektrode bezeichnet.

Ausdrücklich festzuhalten ist aber, dass auch davon abweichende Elektrodenanordnungen und Phasenlagen zum erfinderischen Effekt führen, dass sich im Reaktionsvolumen ein periodisch rotierendes E-Feld ausbildet. Das einzige Erfordernis ist, dass sich mindestens drei Elektroden wie beschrieben längs der Mantelfläche erstrecken und in einem Drehsinn mit aufsteigenden Phasenlagen angesteuert werden. Die Rotation der radialen Feldkomponente erfolgt dann zwar im Allgemeinen nicht "harmonisch" im Sinne einer Kreisbewegung mit konstanter Winkelgeschwindigkeit, aber sie findet statt und bewirkt erfindungsgemäße Vorteile.

Im Folgenden wird die erfindungsgemäße Vorrichtung mit dem Begriff *"N-phasen-Multipol"* bezeichnet, also z.B. im Fall von drei Elektroden mit *"N-Phasen-Tripol".* Im Stand der Technik gelegene RF-Multipole, bei denen wie oben ausführlich erläutert die Elektroden nur mit zwei Phasenlagen (0° und 180°) angesteuert werden, und die daher kein rotierendes E-Feld erzeugen und bei denen ferner das E-Feld auf der Zentrallinie stets Null ist, werden mit dem Begriff *"2-Phasen-Multipole"* bezeichnet.

Weitere Einzelheiten und Vorteile der Erfindung werden anhand der beiliegenden Zeichnungen in der detaillierten Beschreibung erläutert.

Fig. 1      zeigt eine grobschematische Schrägansicht eines Ausführungsbeispiels der erfindungsgemäßen Vorrichtung mit vier symmetrisch angeordneten Elektroden (6).

Fig. 2a-c      zeigen grobschematische Schnitte durch einen erfindungsgemäßen N-Phasen-Tripol (Fig. 2a) und einen N-Phasen-Quadrupol (Fig. 2b und 2c) sowie jeweils den zeitlichen Verlauf des rotierenden **E**-Feld-Vektors $\mathbf{E_r(Z,t)}$.

Fig. 3      zeigt grobschematisch den qualitativen Verlauf der mittleren Stoßenergie zwischen Primärionen und neutralen Trägergas-Teilchen auf der Zentrallinie in Abhängigkeit von der Zeit innerhalb einer Periodendauer T für einen RF-Ionentrichter ohne und mit überlagerter DC-Gleichspannung, für einen 2-Phasen-Qadrupol (=Stand der Technik) sowie für einen erfindungsgemäßen N-Phasen-Multipol.

Fig. 4a-h      zeigen schematische Schrägansichten von erfindungsgemäßen Ausführungsbeispielen der Elektroden (6).

Fig. 5      zeigt grobschematisch einen Schnitt durch einen erfindungsgemäßen N-Phasen-Quadrupol, der mit phasenverschobenen Rechteck-Spannungen mit dem Tastverhältnis 1:4 angesteuert wird. Gezeigt sind auch grobschematisch die an den Elektroden (6) anliegenden Rechteck-Spannungen sowie der E-Feld-Vektor $\mathbf{E_r(Z,t)}$ zu den vier Zeitpunkten $t_1$ bis $t_4$.

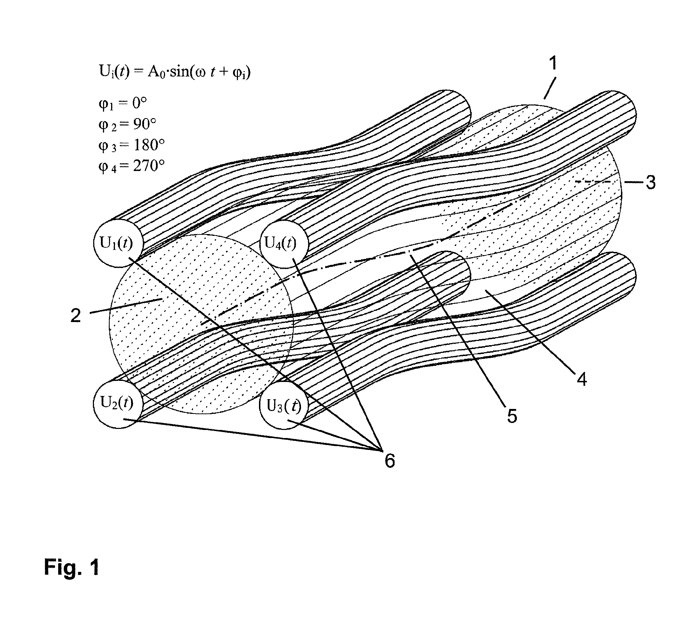

Fig. 1 zeigt eine grobschematische Schrägansicht eines Ausführungsbeispiels der erfindungsgemäßen Vorrichtung mit vier symmetrisch angeordneten Elektroden (6), die mit vier Sinus-Spannungen $U_i(t)$ mit den Phasenlagen 0°/90°/180°/270° angesteuert werden. Gezeigt sind die Elektroden (6), sowie das Reaktionsvolumen (1) mit den beiden Deckflächen (2, 3), der Mantelfläche (4) und der Zentrallinie (5). Die Wechselspannungsquelle und die elektrischen Verbindungen zu den Elektroden sind zugunsten der Übersichtlichkeit in Fig. 1 nicht gezeigt. Die Zentrallinie (5) ist hier S-förmig gebogen ausgebildet, und der Querschnitt durch das Reaktionsvolumen (1) ist im gesamten Verlauf der Zentrallinie (5) kreisförmig mit konstantem Radius.

Besonders vorteilhaft am in Fig. 1 gezeigten Ausführungsbeispiel mit S-förmig gebogener Zentrallinie ist, dass von der Primärionenquelle austretende unerwünschte Strahlung auf ihrem (geraden) Weg durch das Reaktionsvolumen leicht ausgeblendet werden kann, z.B. durch z.B. eine Blende an der Deckfläche (3). Dies ist von Vorteil, weil so einfach verhindert werden kann, dass unerwünschte Hintergrund-Strahlung in die der Reaktionskammer folgende Analysator/Detektor-Einheit gelangt.

Deutlich erkennbar ist in Fig. 1, dass die vier Elektroden (6) erfindungsgemäß mit Wechselspannungen angesteuert werden, deren Phasenlage in einem Drehsinn aufsteigend ist. Der gezeigte Drehsinn ist hier der Gegenuhrzeigersinn.

Das Anlegen von Sinus-Spannungen an die hier gezeigte in jeder Radialebene symmetrische Elektrodenanordnung mit den gezeigten regelmäßigen Phasenlagen (0°/90°/180°/270°) ist besonders vorteilhaft, da die radiale Feldvektor-Komponente $\mathbf{E_r(Z,t)}$ in diesem Fall auf der Zentrallinie eine harmonische Kreisbewegung mit konstantem Betrag und konstanter Winkelgeschwindigkeit vollführt. Aber auch andere, weniger symmetrische Anordnungen der Elektroden bzw. andere Signalformen und Phasenlagen der Wechselspannungen sind erfindungsgemäß vorgesehen und mitunter vorteilhaft. Beispielsweise führen weniger symmetrische Anordnungen und Phasenlagen dazu, dass sich der Betrag

$|\mathbf{E_r}(Z,t)|$ während eines Umlaufes ändert, also nicht konstant ist. Dies ist z.B. von Vorteil, wenn in einem Probegas mit vielen verschiedenen Analyt-Komponenten die Ionen nicht mit konstanter Feldstärke, sondern in einem breiteren Energieband beschleunigt werden sollen.

Fig. 2a-c zeigen grobschematische Schnitte durch einen erfindungsgemäßen N-Phasen-Tripol (Fig. 2a) und einen N-Phasen-Quadrupol (Fig. 2b und 2c) sowie jeweils den zeitlichen Verlauf des rotierenden E-Feld-Vektors $\mathbf{E_r}(Z,t)$. Auf Bezugzeichen wurde in dieser Abbildung zugunsten der Übersichtlichkeit verzichtet, da klar hervorgeht, dass es sich um Schnitte durch die Elektroden (6) handelt, an denen die Wechselspannungen $U_i(t)$ anliegen.

In Fig. 2a ist die Situation bei einem erfindungsgemäßen N-Phasen-Tripol gezeigt: Wird diese symmetrische Elektroden-Anordnung mit drei Sinus-Spannungen der Phasenlagen 0°, 120° und 240° angesteuert, so vollführt der E-Feldvektor $\mathbf{E_r}(Z,t)$ auf der Zentrallinie (5) eine harmonische Kreisbewegung mit konstantem Betrag und konstanter Winkelgeschwindigkeit. Grobschematisch gezeigt ist der zeitliche Verlauf des **E**-Feldvektors $\mathbf{E_r}(Z,t)$ unter der Annahme, dass Sinusspannungen der Frequenz 1 MHz anliegen.

Fig. 2b zeigt dasselbe wie Fig. 2a, hier jedoch für einen erfindungsgemäßen N-Phasen-Quadrupol, also ein Ausführungsbeispiel mit vier Elektroden, an denen Sinus-Spannungen mit den Phasenlagen 0°, 90°, 180° und 270° anliegen.

Fig. 2c zeigt dasselbe wie Fig. 2b, wobei hier allerdings der zeitliche Verlauf des **E**-Feldvektors $\mathbf{E_r}(x,t)$ an einem Punkt x abseits der Zentrallinie gezeigt ist. Deutlich erkennbar ist, dass der Feldvektor periodisch rotiert, dass sein Betrag nie null wird und sein Betrag während einer Rotation sich nur mäßig ändert.

Alle in Fig. 1 und Fig. 2 gezeigten N-Phasen-Multipole erzeugen bei einem Gasgemisch aus Ionen und neutralen Trägergas-Teilchen ein effektives Potential, das die Ionen zur Zentrallinie hin fokussiert. Die in Fig. 2c gezeigte Inhomogenität des Feldes abseits der Zentrallinie fällt daher wenig ins Gewicht, da sich die meisten Ionen wegen der Fokussierenden Wirkung des effektiven Potentials in naher Umgebung der Zentrallinie aufhalten, wo das rotierende E-Feld seinen Betrag nur schwach ändert bzw. sein Betrag nahezu konstant ist.

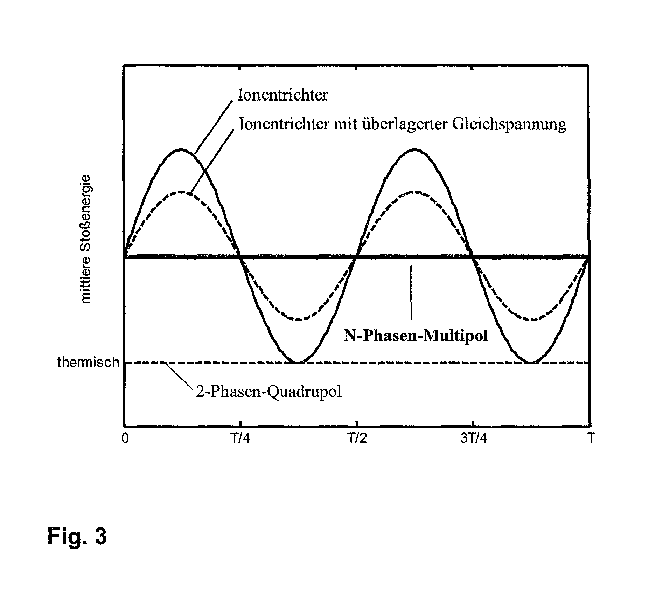

Fig. 3 zeigt grobschematisch den qualitativen Verlauf der mittleren Stoßenergie zwischen Primärionen und neutralen Trägergas-Teilchen auf der Zentrallinie in Abhängigkeit von der Zeit innerhalb einer Periodendauer T für einen RF-Ionentrichter ohne und mit überlagerter DC-Gleichspannung, für einen 2-Phasen-Qadrupol (=Stand der Technik) sowie für einen erfindungsgemäßen N-Phasen-Multipol.

Die Fig. 3 zugrunde liegenden Ionentrichter sind, wie oben im Kapitel "Stand der Technik" in Form von axial angeordneten Ringelektroden ausgeführt, die abwechselnd mit 0° und 180° phasenverschobenen RF-Wechselspannungen und optional zusätzlich mit DC-Gleichspannungen beaufschlagt werden und so ein oszillierendes Wechselfeld in axialer Richtung erzeugen bzw. im Falle der zusätzlichen DC-Beaufschlagung auch noch einen DC-Offset in axialer Richtung. In Fig. 1 ist deutlich erkennbar, dass bei solchen als Ionentrichter ausgeführten Reaktionskammern die mittlere Stoßenergie der Ionen stark oszilliert und daher eine optimale und konstante mittlere Stoßenergie der Ionen nicht erzielbar ist. Die Oszillation der Stoßenergie erfolgt mit der doppelten Frequenz der angelegten Wechselspannung, da für die Beschleunigung der Ionen und damit für die Stoßenergie das Quadrat des elektrischen Feldes die maßgebliche Größe ist. Deutlich erkennbar ist, dass beim Ionentrichter ohne DC-Offset die Zufuhr von Stoßenergie immer wieder Null wird, weshalb zu diesen Zeiten die Ionen nur die thermische mittlere Stoßenergie haben. Beim Ionentrichter mit DC-Offset kann die Amplitude der RF-Wechselspannung zwar kleiner gewählt werden, trotzdem verbleiben starke Oszillationen. Ferner ist der DC-Offset axial längs der Zentrallinie ausgerichtet und treibt die Ionen auf Kosten der Produktionenausbeute rascher in axialer Richtung aus dem Reaktionsvolumen.

In Fig. 3 ist auch deutlich erkennbar, dass mit RF-Wechselspannungen angesteuerte 2-Phasen-Quadrupole am Stand der Technik die Ionen auf der Zentrallinie gar nicht beschleunigen, da dort das elektrische Feld aus Symmetriegründen stets Null ist. Auf der Zentrallinie, also an jenem Ort, wo sich wegen der Fokussierung die meisten Ionen aufhalten, haben die Ionen daher nur die thermische mittlere Stoßenergie und bilden vermehrt Cluster. Abseits der Zentrallinie oszilliert das Feld ohne zu rotieren, weshalb auch der Betrag der Feldstärke oszilliert. Das Erzielen einer optimalen, vorzugsweise konstanten mittleren Stoßenergie zur Verringerung der Clusterbildung wird deshalb auch abseits der Zentrallinie verunmöglicht. Es gibt auch 2-Phasen-Multipole, bei denen zur Beschleunigung der Ionen auch ein axial ausgerichteter DC-Offset überlagert ist, was jedoch den bereits beschriebenen Nachteil mit sich bringt, dass die Ionen dadurch rascher aus dem Reaktionsvolumen getrieben werden.

Ferner ist in Fig. 3 deutlich erkennbar, dass beim erfindungsgemäßen N-Phasen-Multipol die mittlere Stoßenergie auf der Zentrallinie zeitlich konstant ist, mit allen bereits ausführlich diskutierten Vorteilen. Dieser Abbildung liegt ein erfindungsgemäßer N-Phasen-Multipol gemäß Fig. 1 oder 2 zugrunde, der wegen symmetrischer Ausbildung und Ansteuerung mit Sinus-Spannungen mit regelmäßigen Phasenlagen $\varphi_i = [(i-1)/N]\cdot360°$ auf der Zentrallinie einen mit einer harmonischen Kreisbewegung rotierenden und Betragskonstanten Feldvektor $\mathbf{E_r}(Z,t)$ generiert.

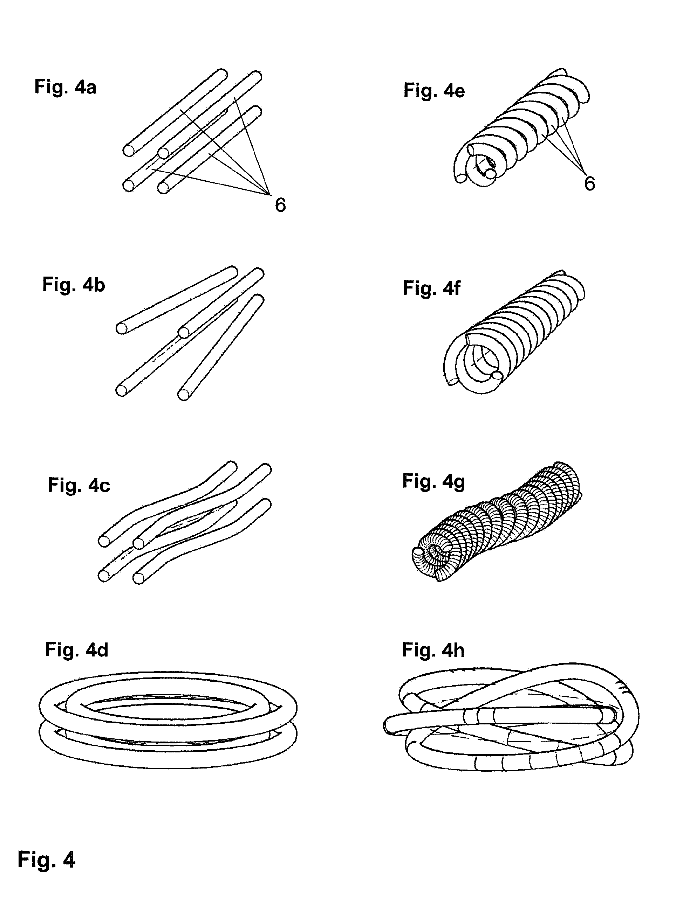

Die Figuren Fig. 4a-h zeigen Schrägansichten von erfindungsgemäßen Ausführungsbeispielen der Elektroden (6). Aus Gründen der Übersichtlichkeit sind nur die Elektroden und die Zentrallinie (5) (strichliert) gezeigt, nicht aber die Oberfläche des Reaktionsvolumens (1).

Fig. 4e-h zeigen Ausführungsbeispiele mit helixförmig ausgebildeten Elektroden (6). Diese Ausführungsformen erzeugen bei einem Gasgemisch aus Ionen plus neutralen Trägergas-Teilchen ein effektives Potenzial in axialer Richtung. Dieses effektive axiale Potential kann zum moderaten Transport der Ionen durch das Reaktionsvolumen vorteilhaft eingesetzt werden. Die Richtung dieses effektiven axialen Potentials bei helizierten Elektroden hängt vom Drehsinn der angelegten Wechselspannungen ab. Daher kann dieses effektive Potential auch dazu genutzt werden, die Ionen gegenüber dem Probegasfluss zu bremsen, um sie länger im Reaktionsvolumen zu halten.

Ebenso sind Ausführungsformen vorteilhaft, bei denen sich die Mantelfläche längs der Zentrallinie verjüngt, wie in Fig. 4b und f gezeigt. Bei solchen Ausführungsformen wird neben der rotierenden radialen **E**-Feldkomponente auch eine (moderate) Feldkomponente $E_{axi}(Z)$ generiert, die auch zeitlich konstant sein kann, und somit einen axialen DC-Beitrag liefert, der vorteilhaft zum moderaten Transport der Ionen durch das Reaktionsvolumen oder zum Bremsen gegenüber dem Probegasfluss eingesetzt werden kann. Ferner können sich verjüngende Elektrodenkonfigurationen z.B. vorteilhaft zum Fokussieren der Ionen auf eine Ausgangsblende eingesetzt werden.

Fig. 4c und g zeigen Ausführungsbeispiele mit S-förmig gebogener Zentrallinie, deren Vorteile oben bereits ausführlich genannt wurden. Selbstverständlich sind auch andere vorteilhafte Formen der Zentrallinie, als S-förmig denkbar und erfindungsgemäß vorgesehen.

Die Figuren Fig. 4d und h zeigen einen Spezialfall eines erfindungsgemäßen Reaktionsvolumens: Hier fallen die erste Deckfläche und die zweite Deckfläche in einer Fläche zusammen und das Reaktionsvolumen ist in sich geschlossen, womit die Ionen beispielsweise sehr lange im Reaktionsvolumen gehalten werden können. Zum Einbringen und für den Abtransport der Gasteilchen wären dann allerdings geeignete zusätzliche Vorrichtungen vorzusehen.

Selbstverständlich sind auch Kombinationen der in Fig. 4 gezeigten Ausbildungen der Elektroden bzw. der Zentrallinie und Mantelfläche des Reaktionsvolumens denkbar und erfindungsgemäß vorgesehen, wie z.B. gebogen und sich verjüngend, oder z.B. in einem Abschnitt sich nicht verjüngend, in einem zweiten Abschnitt sich verjüngend sowie eine Vielzahl weiterer denkmöglicher Ausformungen.

Selbstverständlich sind auch andere Elektrodenformen, als die in Fig. 4 gezeigten denkmöglich und erfindungsgemäß vorgesehen, wie z.B. Helizes mit variierender Ganghöhe oder andere Freiformen, die sich vom Rand der ersten Deckfläche (2) zum Rand der zweiten Deckfläche (3) erstrecken und sich tangierend an die Mantelfläche (4) schmiegen.

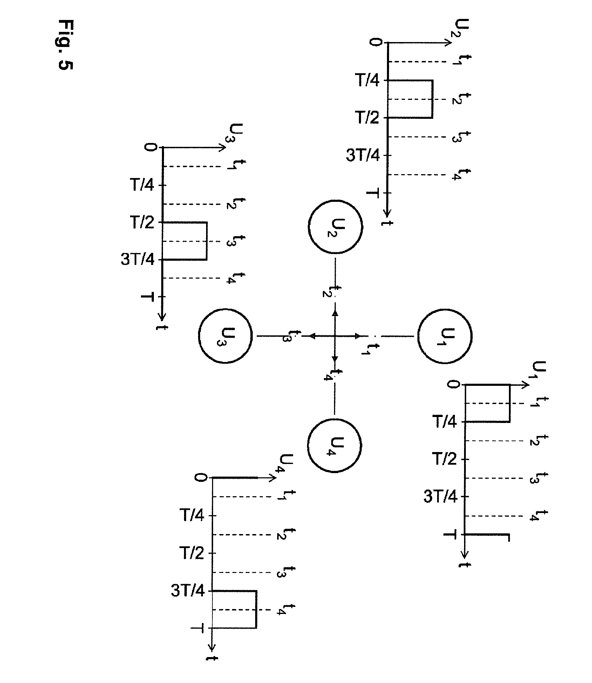

Fig. 5 zeigt grobschematisch einen Schnitt durch einen erfindungsgemäßen N-Phasen-Quadrupol, der mit phasenverschobenen Rechteck-Spannungen mit dem Tastverhältnis 1:4 angesteuert wird. Gezeigt sind auch grobschematisch die an den Elektroden (6) anliegenden Rechteck-Spannungen sowie der **E**-Feld-Vektor $E_r(Z,t)$ zu den vier Zeitpunkten $t_1$ bis $t_4$.

In Fig. 5 ist deutlich erkennbar: zum Zeitpunkt $t_1$ liegt nur an der ersten Elektrode eine Spannung an, deshalb zeigt der E-Feld-Vektor zu diesem Zeitpunkt zur ersten Elektrode. Zum Zeitpunkt $t_2$ liegt nur an der zweiten Elektrode eine Spannung an, deshalb zeigt der **E**-Feld-Vektor zu diesem Zeitpunkt zur zweiten Elektrode, u.s.w. Der **E**-Feld-Vektor rotiert also quasi "hüpfend" in 90°-Schritten, sein Betrag ist dabei aber konstant. Verallgemeinernd lässt sich zeigen, dass bei folgenden Tastverhältnissen der Betrag des "hüpfend" rotierenden **E**-Feld-Vektors konstant bleibt: Das Tastverhältnis $Q$ der Rechteckspannung muss folgender Gleichung genügen:

$$Q = (n/N):N, \text{ wobei N die Anzahl der Elektroden ist und } n \text{ eine ganze Zahl zwischen 1 und (1-N).}$$

Beispielsweise könnte man also einen erfindungsgemäßen Quadrupol mit den Tastverhältnissen 1:4, 2:4 und 3:4 ansteuern, und - korrekte Phasenlage der Rechteckspannungen vorausgesetzt - der Betrag des "hüpfend" rotierenden E-Feldvektors bleibt konstant.

Die bevorzugten Frequenzen liegen im MHz-Bereich, und die bevorzugten Spannungen reichen bis in den Kilovolt-Bereich. Mit solchen Eckdaten sind wegen der beschränkten Grenzfrequenz und Anstiegs-Rate (Slew-rate) von realen Wechselstromquellen perfekte Rechteckspannungen technisch nicht machbar. Bei real herstellbaren Rechteckspannungen mit endlicher Anstiegszeit mag es also sein, dass in jenem Zeitfenster, in welchem der Rechteckpuls von einer Elektrode zur nächsten "übergeben" wird, zu Schwankungen im Betrag des Feldvektors kommen mag. Solange diese "Übergabe"-Zeitfenster aber verglichen mit der Periodendauer T kurz gehalten werden können, bleiben die erfindungsgemäßen Vorteile naturgemäß erhalten, weil die Ionen zumindest *zumeist* mit der optimalen Feldstärke beschleunigt werden können.

Bei der Ausgestaltung des Reaktionsvolumens (1), d.h. bei der erfindungsgemäßen Ausbildung und Anordnung der Elektroden (6), die sich an die Mantelfläche (4) schmiegen, sind folgende **Abmessungen und Ausbildungen** bevorzugt, wobei sich die besonders bevorzugten Abmessungen und Ausbildungen aus den konkreten Erfordernissen und Spezifikationen der jeweiligen Anwendung ergeben:

**Länge** [L] des Reaktionsvolumens längs der Zentrallinie (5):

$L$ = ca. 5 mm bis ca. 100 mm

**Innendurchmesser** [$D$] des Reaktionsvolumens (1), rechtwinklig zur Zentrallinie (5) gemessen:

$D$ = 1 mm bis ca. 20 mm

**Querschnitt der Elektroden** (6):

Zur Vermeidung von Feldspitzen ist es vorteilhaft, scharfe Kanten im Elektrodenquerschnitt zu vermeiden. Besonders bevorzugt sind folgende Querschnitte:

- kreisförmige oder ellipsenförmige Querschnitte, oder Segmente daraus mit abgerundeten Kanten. Kreisförmige Querschnitte sind z.B. besonders bevorzugt zur Optimierung der Betrags-Konstanz des rotierenden E-Feldes auf der Zentrallinie (5).
- Parabelsegmente mit abgerundeten Kanten, insbesondere zur Optimierung der Homogenität des E-Feldes und/oder des effektiven Potentials im gesamten Reaktionsvolumen (1)
- Hyperbelsegmente mit abgerundeten Kanten, insbesondere zur Optimierung der Homogenität des **E**-Feldes und/oder des effektiven Potentials im gesamten Reaktionsvolumen (1)
- Auch Querschnitte, die sich im Erstreckungsverlauf der Elektroden verjüngen, sind erfindungsgemäß vorgesehen und vorteilhaft, insbesondere bei sich verjüngendem Reaktionsvolumen.

Folgende **Prozessparameter** sind bei der erfindungsgemäß durchgeführten chemischen Ionisation besonders bevorzugt:

**Gasdruck** [$p$] des Probegases im Reaktionsvolumen (1):

$p$ = ca. 10 mbar bis Atmosphärendruck (1 bar), wobei hohe Gasdrücke zwar aus mehreren Gründen bevorzugt sind, insbesondere weil sie die Produktionenausbeute erhöhen, aber andererseits zur Vermeidung von Clusterbildung hohe elektrische Feldstärken erfordern, mit denen man mitunter an Grenzen der technischen Machbarkeit stößt. (Für eine detailliertere Erklärung hierzu siehe unten, bei "Maximalamplitude".)

**Konzentration** [$Konz.$] der im Probegas enthaltenen Reaktantgase bzw. Analyten:

$Konz.$ = kleiner als 10 ppbv (ppbv = parts per billion by volume), wobei auch bei Konzentrationen im Sub-pptv-Bereich (pptv = parts per trillion by volume) noch eine signifikante Produktionenausbeute erzielbar ist.

**Maximalamplitude** [$E_{max}$] der radialen Komponente des rotierenden E-Feldes auf der Zentrallinie (5), wobei die optimale Amplitude vom Stoffgemisch des Probegases (Clusterbildung versus Fragmentierung der im Stoffgemisch enthaltenen Analyt-Teilchen) sowie insbesondere vom Gasdruck $p$ abhängt: Bei hohen Gasdrücken $p$ ist die mittlere freie Weglänge der Gasteilchen kleiner, daher muss zur Vermeidung von Clusterbildung das beschleunigende elektrische Feld dementsprechend größer sein, damit die Teilchen zwischen zwei Stößen die nötige Energie durch das Feld erhalten.

$E_{max}$ = ca. 500 V/cm bis ca. 10 kV/cm

**Frequenz** $f$ des rotierenden **E**-Feldes bzw. der an die Elektroden angelegten Wechselspannungen $U_i(t)$, wobei die optimale Frequenz stark von anderen Prozessparametern wie z.B. dem Gasdruck $p$ sowie von der technischen Machbarkeit abhängt (siehe oben: 10 kV/cm im MHz-Bereich stößt an technische Grenzen):

$f$ = ca. 100 kHz bis ca. 100 MHz

Daraus ergeben sich - in Abhängigkeit vom obigen Innendurchmesser D und in Abhängigkeit von der technischen Machbarkeit - folgende **typische Amplituden** [$U_0$] der an die Elektroden (6) angelegten Wechselspannungen:

$U_0$ = ca. 50 V bis ca. 10 kV

**Signalform** der an die Elektroden (6) angelegten Wechselspannungen $U_i(t)$:

Besonders bevorzugt sind wie oben ausgeführt sinusförmige und rechteckförmige Wechselspannungen. Aber auch davon abweichende Signalformen sind für manche Anwendungen vorteilhaft und erfindungsgemäß vorgesehen, wie z.B.:

- Dreieck- oder Sägezahn-Spannungen, z.B. zum gezielten Verbreitern der Stoßenergie des vom Feld beschleunigten Ionen-Ensembles.
- Zusätzlich aufgebrachte Gleichspannungs-Offsets, insbesondere auch solche, die sich längs der Elektroden (6) ändern, indem die Elektroden segmentiert ausgeführt sind oder aus einem widerstandsbehafteten Material gefertigt sind. Dadurch kann z.B. eine axial wirkende E-Feld-Komponente zum Transport der Ionen in Richtung Ausgang der Reaktionskammer implementiert werden.
- Zusätzlich aufinodulierte Wechselspannungen, z.B. zum Verbessern des auf die Zentrallinie (5) hin fokussierenden effektiven Potentials.

Die Leistungsfähigkeit der Erfindung wurde anhand eines ersten Prototypen auf folgende Weise experimentell getestet: Bei einem State-of-the-Art-PTR-Massenspektrometer (IONICON® PTR-TOF 8000) wurde die vom Hersteller ausgelieferte Protonentausch-Reaktionskammer auf eine erfindungsgemäße Reaktionskammer umgerüstet, und es wurden mit identischen Probegasemischen in beiden Varianten Vergleichsmessungen durchgeführt. Als Primärionen wurden jeweils $H_3O^+$-Ionen verwendet, und die Prozessparameter Gasdruck, elektrische Feldstärke, und Temperatur wurden für jede der beiden Varianten in längeren Versuchsreihen optimiert.

Die vom Hersteller ausgelieferte Reaktionskammer ist als Standard-Driftröhre mit Ringelektroden, an die DC-Spannungen angelegt werden, ausgeführt. Die axiale Länge des zylindrischen Reaktionsvolumens in dieser Standard-Driftföhre ist 10 cm.

Der erfindungsgemäße Prototyp der Reaktionskammer ist als 3-Phasen-Tripol ausgeführt. Die Länge des ebenfalls zylindrischen Reaktionsvolumens beträgt 7 cm. An die drei Elektroden wurden erfindungsgemäß phasenverschobene RF-Sinusspannungen mit einer Frequenz von 10 MHz und einer Amplitude von 200 Volt angelegt.

Tabelle 1 zeigt die experimentellen Ergebnisse. Gemessen wurden vier verschiedene Analytgase im Trägergas Luft mit einer relativen Feuchte von ca. 60% bei 20° Celsius. Mit der erfindungsgemäßen Reaktionskammer konnte eine drastische Steigerung der Empfindlichkeit des Spektrometers erzielt werden, was auf die verbesserte Produktionenausbeute sowie auf die optimale Verringerung von $H_3O^+$-$H_2O$-Clusterbildung zurückzuführen ist. Spalte 2 und 3 zeigen die Empfindlichkeiten mit Standard-Driftröhre und erfindungsgemäßem 3-Phasen-Tripol in counts pro Sekunde pro parts per billion by volume [cps/ppbv]. Spalte 4 zeigt den Faktor, um den die Empfindlichkeit durch den Prototyp gesteigert werden konnte. Spalte 5 zeigt diesen Faktor hochgerechnet unter der Annahme, dass das erfindungsgemäße Reaktionsvolumen dieselbe axiale Länge wie die Standard-Driftröhre aufweist. (In realiter war die für die Reaktionszeit der Ionen und damit auch für die Produktionenausbeute bzw. Empfindlichkeit maßgebliche axiale Länge des Reaktionsvolumens bei der Standard-Driftröhre 10 cm, Prototypen jedoch lediglich 7 cm.)

Tabelle 1:

| Analyt | Standard-Driftröhre [cps/ppbv] | 3-phasen-Tripol [cps/ppbv] | Faktor, experimentell | Faktor, auf selbe Länge hochgerechnet |
|---|---|---|---|---|
| Benzen | 80 | 925 | 11,6 | 16,6 |
| Toluen | 101 | 1454 | 14,4 | 20,6 |
| p-Xylen | 109 | 1988 | 18,2 | 26 |
| Azeton | 111 | 1375 | 12,4 | 17,7 |

**Patentansprüche**

1. **Verfahren** zur chemischen Ionisation eines Gasgemisches bzw. Probegases mittels Ionen-Atom-Reaktionen oder Ionen-Molekül-Reaktionen [IMR], insbesondere mittels Protonentausch-Reaktionen [PTR], wobei genanntes Gasgemisch aus zumindest einer Hauptkomponente bzw. einem Trägergas (z.B. $O_2$, $N_2$ oder einem Gemisch daraus, z.B. Luft) und einem oder mehreren Reaktantgasen bzw. Analyten (z.B. volatilen organischen Verbindungen [VOCs]) besteht, wobei genannter Ionisationsprozess dergestalt erfolgt, dass durch Reaktionen mit ins Gasgemisch zusätzlich eingebrachten Primärionen (z.B. $H_3O^+$, $NH_3^+$, $NO^+$, $O_2^+$, $NO_3^-$) aus neutralen Atomen oder Molekülen der Reaktantgase Produktionen entstehen,
wobei das Verfahren folgende Verfahrensschritte umfasst:

(a) Einbringen des Gasgemisches in einen Reaktionsbereich bzw. in ein Reaktionsvolumen (1),

wobei die Oberfläche dieses Reaktionsvolumens aus einer ersten Deckfläche (2), einer zweiten Deckfläche (3) und einer sich zwischen den beiden Deckflächen (2,3) erstreckenden Mantelfläche (4) besteht und das Reaktionsvolumen (1) von einer Zentrallinie (5) durchdrungen ist, welche sich von der ersten Deckfläche (2) zur zweiten Deckfläche (3) erstreckt und zur Gänze innerhalb des Reaktionsvolumens verläuft, sodass im Reaktionsvolumen eine axiale Richtung definierbar ist, die parallel zur Zentrallinie (5) verläuft und eine radiale Richtung und eine Radialebene definierbar sind, die rechtwinklig auf die Zentrallinie (5) stehen;

(b): Einbringen von für die chemische Ionisation der einen oder mehreren Reaktantgaskomponenten geeigneten Primärionen (z.B. $H_3O^+$, $NH_3^+$, $NO^+$, $O_2^+$, $NO_3^-$) in das Reaktionsvolumen (1);

**ferner gekennzeichnet durch:**

(c): Beschleunigen der im Reaktionsvolumen (1) befindlichen Ionen (Primärionen, entstandene Produktionen und allenfalls entstandene Ionen-Cluster) mittels eines zeitlich periodischen elektrischen Feldes E(x,t),

(d) wobei $E(x,t)$ an allen auf der Zentrallinie (5) gelegenen Punkten {Z} eine bezogen auf diese Zentrallinie (5) rechtwinklige (i.e. radiale) Feldvektor-Komponente $E_r(Z,t)$ hat, die periodisch rotiert, d.h. während der Periodendauer T genau eine 360°-Drehung in der Radialebene vollführt und deren Betrag $|Er(Z,t)|$ vorzugsweise zu mehr als 80% der innerhalb einer Periodendauer T liegenden Zeiten ungleich Null ist, besonders bevorzugt zu allen Zeiten ungleich Null ist,

(e) wobei $E(x,t)$ an allen auf der Zentrallinie (5) gelegenen Punkten {Z} gelegenen Punkten eine zur Zentrallinie (5) parallele (i.e. axiale) Feldvektor-Komponente $E_{axi}(Z,t)$ hat, deren Betrag $|E_{axi}(Z,t)|$ vorzugsweise kleiner ist, als der Betrag der rotierenden radialen Komponente $|E_r(Z,t)|$, vorzugsweise deutlich kleiner oder Null ist, und

(f) wobei $t$ die Zeit ist, $x$ ein Ortsvektor ist, beispielsweise mit den kartesischen Koordinaten (x,y,z), $Z$ der Ortsvektor eines auf der Zentrallinie (5) gelegenen Punktes ist, {Z} die Menge aller zur Zentrallinie (5) gehörigen Ortsvektoren $Z$ ist und $T$ die Periodendauer einer 360°-Drehung von $E_r(Z,t)$ ist.

2. Verfahren nach Anspruch 1, **dadurch gekennzeichnet, dass** der Betrag $|Er(Z,t)|$ an allen auf der Zentrallinie (5) gelegenen Punkten {Z} zu mehr als 80% der innerhalb einer Periodendauer T liegenden Zeiten höchstens um 50% seines Maximalwertes $E_{max}(Z)$ variiert, d.h. im Intervall $[0,5*E_{max}(Z),E_{max}(Z)]$ liegt.

3. Verfahren nach einem der Ansprüche 1 oder 2, **dadurch gekennzeichnet, dass** der Betrag $|E_r(Z,t)|$ über zumindest 80% der Länge der Zentrallinie (5) um maximal 50% seines Maximalwertes variiert.

4. Verfahren nach einem der Ansprüche 1 bis 3, **dadurch gekennzeichnet, dass** die Rotation der radialen Feldvektorkomponente $E_r(Z,t)$ im Wesentlichen einer harmonischen Kreisbewegung entspricht, d.h. dass $E_r(Z,t)$ in kartesischen Koordinaten (X,Y) dargestellt, die im jeweiligen Punkt $Z$ rechtwinklig auf die Zentrallinie (5) stehen, folgender Gleichung genügt:

$$E_r(Z,t) = u_x \cdot [A_x(Z,t)\cdot \sin(\omega t+\Phi_0)] + u_y \cdot [A_x(Z,t)\cdot \cos(\omega t+ \Phi_0)],$$

wobei $u_x$ der Einheitsvektor der X-Koordinate und $u_y$ der Einheitsvektor der Y-Koordinate ist, $\omega$ die Kreisfrequenz der Rotation ist, $\Phi_0$ ein globaler Phasen-Offset ist, und

wobei der Betrag $|E_r(Z,t)|$ um maximal $\pm 10\%$ variiert, vorzugsweise zu allen Zeiten konstant ist, d.h. $|E_r(Z,t)| = E_0 \pm 10\%$., wobei $E_0$ eine Konstante ist.

5. Verfahren nach einem der Ansprüche 1 bis 4, **dadurch gekennzeichnet, dass** der Betrag $|E_r(Z,t)|$ des rotierenden Feldvektors $E_r(Z,t)$ zu allen Zeiten $t$ und an allen auf der Zentrallinie gelegenen Punkten {Z} ungleich Null und nahezu konstant ist, d.h. um maximal $\pm 10\%$ von seinem zeitlich und örtlich gemittelten Mittelwert $E_0$ abweicht, und wobei die axiale Feldkomponente $E_{axi}(Z,t)$ zu allen Zeiten gleich Null ist,

d.h. $E(Z,t) = E_r(Z,t)$ und $|E_r(Z,t)| = E_0 \pm 10\%$.

6. **Vorrichtung** zur chemischen Ionisation eines Gasgemisches bzw. Probegases mittels Ionen-Atom-Reaktionen oder Ionen-Molekül-Reaktionen [IMR], insbesondere mittels Protonentausch-Reaktionen [PTR], wobei genanntes Gasgemisch aus zumindest einer Hauptkomponente bzw. einem Trägergas (z.B. $O_2$, $N_2$ oder einem Gemisch daraus, z.B. Luft) und einem oder mehreren Reaktantgasen bzw. Analyten (z.B. volatilen organischen Verbindungen [VOCs]) besteht, wobei genannter Ionisationsprozess dergestalt erfolgt, dass durch Reaktionen mit ins Gasgemisch zusätzlich eingebrachten Primärionen (z.B. $H_3O^+$, $NH_3^+$, $NO^+$, $O_2^+$, $NO_3^-$) aus neutralen Atomen oder Molekülen der Reaktantgase Produktionen entstehen,

(a) mit einem Reaktionsbereich bzw. ein Reaktionsvolumen (1),

(b) wobei die Oberfläche dieses Reaktionsvolumens aus einer ersten Deckfläche (2), einer zweiten Deckfläche (3) und einer sich zwischen den beiden Deckflächen (2, 3) erstreckenden Mantelfläche (4) besteht und das Reaktionsvolumen (1) von einer Zentrallinie (5) durchdrungen ist, welche sich von der ersten Deckfläche (2) zur zweiten Deckfläche (3) erstreckt und zur Gänze innerhalb des Reaktionsvolumens (1) verläuft, sodass im Reaktionsvolumen (1) eine axiale Richtung definierbar ist, die parallel zur Zentrallinie (5) verläuft und eine radiale Richtung und eine Radialebene definierbar sind, die rechtwinklig auf die Zentrallinie (5) stehen,

(c) mit drei oder mehr vorzugsweise stabförmig ausgebildeten Elektroden (6), d.h. N Elektroden (6), wobei N eine ganze Zahl größer oder gleich Drei ist,

(d) wobei jede dieser N≥3 Elektroden (6) so ausgebildet und angeordnet ist, dass sie sich vom Rand der ersten Deckfläche (2) bis zum Rand der zweiten Deckfläche (3) erstreckt und sich von außen an das Reaktionsvolumen (1) schmiegt, d.h., dass sie in ihrem gesamten Erstreckungsverlauf die Mantelfläche (4) von außen tangierend berührt,

(e) mit einer Wechselspannungsquelle, die mit jeder der N≥3 Elektroden (6) elektrisch verbindbar ist,

**dadurch gekennzeichnet, dass**

(f) die Wechselspannungsquelle so ausgebildet ist, dass an jede der N≥3 Elektroden (6) jeweils eine periodische Wechselspannung (i.e. eine zeitlich periodische Spannung) $U_i(t)$ anlegbar ist, wobei $U_i(t)$ die Wechselspannung an der i-ten Elektrode ist,

(g) wobei die Wechselspannungen $U_1(t)$ bis $U_N(t)$ jeweils dieselbe Periodendauer T bzw. dieselbe Frequenz $f = 1/T$ haben,

(h) wobei aber alle Wechselspannungen $U_i(t)$ eine unterschiedliche Phasenlage $\varphi_i$ zwischen 0° und 360° haben, d.h. jede Spannung $U_{i>1}(t)$ gegenüber der ersten Spannung $U_1(t)$ um den Bruchteil $\Delta t_i = (\varphi_i/360°) \cdot T$ der Periodendauer $T$ zeitlich verschoben ist,

(i) wobei, wenn die Elektroden (6) entlang des Randes einer Deckfläche (2,3) in einer Richtung (d.h. in einem Drehsinn) durchnummeriert werden, die Phasenlagen $\varphi_i$ bzw. $\Delta t_i$ aufsteigend geordnet sind, d.h.

$$\varphi_1 = 0° < \varphi_2 < \ldots < \varphi_i < \ldots < \varphi_N < 360°\text{, bzw.}$$

$$\Delta t_1 = 0 < \Delta t_2 < \ldots < \Delta t_i < \ldots < \Delta t_N < T.$$

7. Vorrichtung nach Anspruch 6, **dadurch gekennzeichnet, dass** die N≥3 Elektroden (6) im Wesentlichen so ausgebildet und angeordnet sind, dass in jeder Radialebene ein Inkreis in sie einschreibbar ist und die Anordnung der N Elektroden diesen Inkreis in gleich große Kreissegmente mit dem Öffnungswinkel 360°/N teilt, wobei die Elektroden so ausgebildet und angeordnet sind, dass jeder auf die Zentrallinie rechtwinklige Schnitt durch die Elektrodenkonfiguration im Wesentlichen rotationsinvariant bezüglich einer Drehung um 360°/N ist.

8. Vorrichtung nach Anspruch 6 oder 7, **dadurch gekennzeichnet, dass** die Phasenlagen $\varphi_i$ bzw. $\Delta t_i$ der N Wechselspannungen $U_i(t)$ folgenden Gleichungen genügen

$$\varphi_i = [(i-1)/N] \cdot 360°\text{, bzw. } \Delta t_i = [(i-1)/N] \cdot T,$$

wobei zwischen allen zwei benachbarten Elektroden (6) jeweils die gleiche Phasendifferenz $\varphi_{i,i+1} = [\varphi_{i+1} - \varphi_i] = 360°/N$ bzw. $\Delta t_{i,i+1} = [\Delta t_{i+1} - \Delta t_i] = T/N$ anliegt.

9. Vorrichtung nach einem der Ansprüche 6 bis 8, **dadurch gekennzeichnet, dass** die Wechselspannungen $U_i(t)$ im Wesentlichen sinusförmig sind, die zu jeder Zeit $t$ um maximal $\pm 20\%$ von der Sinusfunktion $U_i(t) = U_0 * \sin(\omega t - \varphi_i)$ abweichen, vorzugsweise um maximal $\pm 5\%$ oder weniger.

10. Vorrichtung nach einem der Ansprüche 6 bis 9, **dadurch gekennzeichnet, dass** Zentrallinie gebogen ist, z.B. in Form eines Bogens oder S-Schlages oder in sich geschlossen ist, z.B. kreisförmig, wobei dann die erste Deckfläche (2) und die zweite Deckfläche (3) in einer Fläche zusammenfallen.

11. Vorrichtung nach einem der Ansprüche 6 bis 10, **dadurch gekennzeichnet, dass** der auf die Zentrallinie (5) rechtwinklige Querschnitt durch die Mantelflache (4) sich im Verlauf der Mantelfläche (4) von der ersten Deckfläche (2) zur zweiten Deckfläche (3) ändert, beispielsweise sich verjüngt.

12. Vorrichtung nach einem der Ansprüche 6 bis 11, **dadurch gekennzeichnet, dass** die Elektroden (6) und die Wechselspannungsquelle so ausgebildet sind, dass im Reaktionsvolumen (1) ein statisches elektrisches Feld anlegbar ist, beispielsweise durch Segmentieren der N Elektroden (6) oder Verwendung von widerstandsbehafteten Elektroden und Anlegen von Gleichspannungen an die Elektrodensegmente bzw. an die widerstandsbehafteten Elektroden.

13. Vorrichtung nach einem der Ansprüche 6 bis 12, **dadurch gekennzeichnet, dass** die Vorrichtung außer den Elektroden (6) noch weitere Elektroden aufweist, an die Gleich- und/oder Wechselspannungen anlegbar sind.

14. Vorrichtung nach einem der Ansprüche 6 bis 13, **dadurch gekennzeichnet, dass** die Frequenz f der Wechselspannungen $U_i(t)$ im Bereich zwischen 100 kHz und 100 MHz liegt, die Amplituden $U_0$ der der Wechselspannungen $U_i(t)$ im Bereich zwischen 50 V und 10 kV liegen, der Gasdruck $p$ des Probegases im Reaktionsvolumen im Bereich zwischen 10 mbar und 1 bar liegt, die Länge L des Reaktionsvolumens (1) längs der Zentrallinie (5) gemessen im Bereich zwischen 5 mm und 100 mm liegt, und der Innendurchmesser D des Reaktionsvolumens im Bereich zwischen 1 mm und 20 mm liegt.

15. **Anwendung** des Verfahrens nach einem der Ansprüche 1 bis 5 und/oder Verwendung der Vorrichtung nach einem der Ansprüche 6 bis 14 zur Analyse eines Gasgemisches bzw. Probegases, insbesondere zur Analyse mittels CI-Massenspektrometrie, insbesondere mittels IMR- und PTR-Massenspektrometrie.

$U_i(t) = A_0 \cdot \sin(\omega\, t + \varphi_i)$

$\varphi_1 = 0°$
$\varphi_2 = 90°$
$\varphi_3 = 180°$
$\varphi_4 = 270°$

**Fig. 1**

Fig. 2a

Fig. 2b

Fig. 2c

Fig. 2

**Fig. 3**

Fig. 4a

Fig. 4e

Fig. 4b

Fig. 4f

Fig. 4c

Fig. 4g

Fig. 4d

Fig. 4h

Fig. 4

**Fig. 5**

**Europäisches Patentamt**
**European Patent Office**
**Office européen des brevets**

# EUROPÄISCHER RECHERCHENBERICHT

Nummer der Anmeldung

EP 15 15 6526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/164409 A1 (SCHULTZ J ALBERT [US] ET AL) 10. Juli 2008 (2008-07-10) | 6-9, 13-15 | INV. H01J49/06 H01J49/14 |
| Y | * Absätze [0053], [0070], [0071], | 10,11 | |
| A | [0079]; Abbildung 2 * | 1-5 | |
| | ----- | | |
| Y | WO 2010/141776 A2 (VARIAN INC [US]; WANG MINGDA [US]) 9. Dezember 2010 (2010-12-09) | 10 | |
| A | * Absatz [0085] * | 1-9, 11-15 | |
| | ----- | | |
| Y | US 2005/258354 A1 (BABA TAKASHI [JP] ET AL) 24. November 2005 (2005-11-24) | 11 | |
| A | * Absätze [0009], [0020], [0021], [0105] - Absatz [0115]; Abbildung 8 * | 1-10, 12-15 | |
| | ----- | | |
| Y | US 2008/203287 A1 (CRAWFORD ROBERT K [US]) 28. August 2008 (2008-08-28) | 6-8 | |
| A | * Absatz [0021]; Abbildung 2 * | 1-5 | |
| | ----- | | |
| Y | DE 195 17 507 C1 (BRUKER FRANZEN ANALYTIK GMBH [DE]) 8. August 1996 (1996-08-08) * Anspruch 4; Abbildung 1 * | 6-8 | |
| | ----- | | |

**RECHERCHIERTE SACHGEBIETE (IPC)**

H01J
G01N

Der vorliegende Recherchenbericht wurde für alle Patentansprüche erstellt

| Recherchenort | Abschlußdatum der Recherche | Prüfer |
|---|---|---|
| München | 25. August 2015 | Müller, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 15 6526

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-08-2015

| Im Recherchenbericht angeführtes Patentdokument | Datum der Veröffentlichung | Mitglied(er) der Patentfamilie | Datum der Veröffentlichung |
|---|---|---|---|
| US 2008164409 A1 | 10-07-2008 | CA 2656565 A1<br>EP 2046488 A2<br>US 2008164409 A1<br>US 2009309015 A1<br>WO 2008094288 A2 | 07-08-2008<br>15-04-2009<br>10-07-2008<br>17-12-2009<br>07-08-2008 |
| WO 2010141776 A2 | 09-12-2010 | DE 112010002224 T5<br>JP 2012529156 A<br>US 2010308218 A1<br>WO 2010141776 A2 | 20-12-2012<br>15-11-2012<br>09-12-2010<br>09-12-2010 |
| US 2005258354 A1 | 24-11-2005 | JP 4384542 B2<br>JP 2005339812 A<br>US 2005258354 A1<br>US 2007023648 A1 | 16-12-2009<br>08-12-2005<br>24-11-2005<br>01-02-2007 |
| US 2008203287 A1 | 28-08-2008 | KEINE | |
| DE 19517507 C1 | 08-08-1996 | DE 19517507 C1<br>GB 2300751 A<br>US 5708268 A | 08-08-1996<br>13-11-1996<br>13-01-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 001637 U1, Lindinger & Hansel
- US 6107628 A, Smith & Shaffer

**In der Beschreibung aufgeführte Nicht-Patentliteratur**

- **A. HANSEL et al.** *International Journal of Mass Spectrometry and Ion Processes,* 1995, vol. 149/150, 609-619
- **A. JORDAN et al.** *International Journal of Mass Spectrometry,* 2009, vol. 286, 32-38
- **N.G. ADAMS ; D. SMITH.** *International Journal of Mass Spectrometry and Ion Processes,* 1976, vol. 21, 349-359
- **S. BARBER et al.** *Analytical Chemistry,* 2012, vol. 84, 5387-5391